# EUROPEAN PATENT APPLICATION

(11) **EP 3 754 672 A1**
(43) Date of publication of application: **23.12.2020**
(21) Application number: 20180071.1
(22) Date of filing: 15.06.2020
(51) Int. Cl.: H01F 1/01, F25B 21/00

(54) **SHEATH-INTEGRATED MAGNETIC REFRIGERATION MEMBER, PRODUCTION METHOD FOR THE MEMBER AND MAGNETIC REFRIGERATION SYSTEM**

(30) Priority: 19.06.2019 JP 2019113587
(71) Applicant: Shin-Etsu Chemical Co., Ltd., Tokyo 100-0004 (JP)
(72) Inventor: NAKAMURA, Hajime, Echizen-shi, Fukui (JP)
(74) Representative: Vossius & Partner Patentanwälte Rechtsanwälte mbB

(57) **Abstract**

Provided are a sheath-integrated magnetic refrigeration member capable of preventing degradation of a magnetic refrigeration material with time in a magnetic refrigeration system without lowering the magnetocaloric effect and the thermal conductivity of the magnetic refrigeration material and its production method, and a magnetic refrigeration system using the sheath-integrated magnetic refrigeration member.

The invention is a linear or thin band-like sheath-integrated magnetic refrigeration member including a sheath part 1 containing a non-ferromagnetic metal material and a core part 2 containing a magnetic refrigeration material. The production method for a sheath-integrated magnetic refrigeration member of the invention includes a step of filling a powder of a magnetic refrigeration material into the cavity of a pipe containing a non-ferromagnetic metal material, and a step of linearly working the pipe filled with a powder of a magnetic refrigeration material according to one or more working methods selected from the group consisting of grooved reduction rolling, swaging and drawing. The magnetic refrigeration system of the invention is provided with a means of operating in an AMR (active magnetic refrigeration) cycle using the sheath-integrated magnetic refrigeration member of the invention as the AMR bed.

## Description

### Technical Field

The present invention relates to a sheath-integrated magnetic refrigeration member that functions highly efficiently in a magnetic refrigeration system, its production method, and a magnetic refrigeration system using the sheath-integrated magnetic refrigeration member.

### Background Art

Chlorofluorocarbons are ozone depleting substances and are global greenhouse gases, and therefore a novel refrigeration air-conditioning system not using chlorofluorocarbons is specifically noted for environmental protection. Development of refrigerants alternative to chlorofluorocarbons is being actively made, but novel refrigerants satisfactory in performance, cost and safety are not as yet put into practical use.

On the other hand, different from already-existing refrigeration air-conditioning systems, a magnetic refrigeration system that utilizes a change in entropy associated with magnetic field increase (magnetocaloric effect, ΔS) is specifically noted. As a material having a large absolute value of ΔS, Mn(As₁₋ₓSbₓ) (PTL 1) and La(Fe₁₋ₓSiₓ)₁₃Hₓ (PTL 2) and the like are exemplified. In particular, the former has an extremely large ΔS of -30 J/kgK and therefore can be an excellent magnetic refrigeration material, but the component As therein is toxic and therefore application of the material is substantially difficult. Second behind Mn(As₁₋ₓSbₓ), La(Fe₁₋ₓSiₓ)₁₃Hₓ has a large ΔS of around -25 J/kgK and the constituent elements therein are not toxic and are not rare earth metals, and therefore this is a most promising substance. In addition, the ΔS change is limited at around the Curie temperature (Tc) of a substance that shows a magnetocaloric effect, and a material of one kind can function only at a temperature of one point, and therefore cannot be used in a refrigeration system that is required to create a substantially broad temperature difference. Accordingly, a method of substituting a part of components with any other element for changing the operating temperature is employed.

These substances are required to operate at around room temperature (around -70 to +70°C). However, different from already-existing magnetic refrigeration that has heretofore been employed as a means for creating an ultralow temperature difficult to create in vapor refrigeration, there is a problem that a magnetocaloric effect lowers since lattice vibration is not negligible at the above-mentioned operating temperature. An AMR (active magnetic refrigeration) cycle that utilizes the lattice vibration as a thermal storage effect has been developed, and a refrigeration air-conditioning system at around room temperature that utilizes a magnetocaloric effect has become factual.

In an AMR cycle, a magnetic refrigeration material is filled in a state having a clearance through which a heat medium such as water can pass (referred to as a bed part), a magnetic field is applied thereto with a permanent magnet or the like and the heat released with reduction in the entropy of the magnetic refrigeration material is made to run though the medium to thereby drive the heat to one end of the bed (high-temperature end), and subsequently the magnetic field of the permanent magnet is removed whereby the temperature lowers with increase in the entropy, and the medium from which the heat has been removed is made to run on the opposite side to the previous side so that the other end of the bed is made to have a low temperature (low-temperature end). This cycle is repeated to thereby generate a temperature difference between the high-temperature side and the low-temperature side. Regarding the magnetic refrigeration materials to be filled in the AMR cycle, as mentioned hereinabove, different compositions are so filled that those having a higher Tc are on the high-temperature side while those having a lower Tc are on the low-temperature side in order (like cascade filling) to make it possible to crease a large temperature difference.

La(Fe₁₋ₓSiₓ)₁₃Hₓ is produced by introducing hydrogen between the crystal lattices of La(Fe₁₋ₓSiₓ)₁₃. Therefore, owing to a problem that hydrogen could not be sufficiently absorbed in a bulk form of the substance, or a problem that the substance in a bulk form may be broken by expansion accompanied by absorption, it is difficult to use the substance in a bulk form. In addition, the hydrogen having penetrated between the lattices is released in vacuum at 500°C or higher, a hydrogenated powder of the substance could not be sintered. Further, in an AMR cycle, contact continues in a state where a medium such as water is kept run, and therefore when a powder of the substance is filled as such, clogging to occur by powdering accompanied by degradation owing to corrosion of the substance, as combined with the large specific surface area thereof, as well as reduction in the magnetocaloric effect will provide a significantly serious problem in practical use. For preventing this, complexation with a resin will be effective, but the magnetocaloric effect per unit volume may reduce by the volume fraction of the resin and further, though depending on the kind of the resin, the thermal exchange efficiency with the medium may significantly lower owing to reduction in the thermal conductivity of the resin. As another method, the powder may be plated with a plating film of Ni or Cu, which, however, is disadvantageous in point of cost and in addition, the powder form as such is given little latitude in an AMR cycle design from the viewpoint of thermal exchange with a medium

### Citation List

### Patent Literature

PTL 1: JP 2003-28532 A
PTL 2: JP 2006-89839 A

### Summary of the Invention

### Technical Problem

The present invention has been made in consideration of the above-mentioned situation, and its object is to provide a magnetic refrigeration member capable of preventing degradation of a magnetic refrigeration material with time in a magnetic refrigeration system without lowering the magnetocaloric effect and the thermal conductivity of the magnetic refrigeration material.

### Solution to Problem

The present inventors have made assiduous studies for the purpose of attaining the above-mentioned object, and as a result, have found that, when a powder of an R-Fe-Si alloy or a powder of an R-Fe-Si-H alloy is filled in a non-ferromagnetic metal pipe, and then the metal pipe is worked by a cold-working such as grooved reduction rolling, swaging or drawing, the powder of an R-Fe-Si alloy or the powder of an R-Fe-Si-H alloy can be filled in a metal sheath at a high filling rate of 80% or more. With that, the inventors have found that the sheath-integrated magnetic refrigeration member thus produced can exhibit a high corrosion resistance, a high magnetocaloric effect and a high thermal conductivity, and have completed the present invention.

Specifically, the present invention provides the following means (1) to (13).
(1) A linear or thin band-like sheath-integrated magnetic refrigeration member including a sheath part containing a non-ferromagnetic metal material and a core part containing a magnetic refrigeration material.
(2) The sheath-integrated magnetic refrigeration member according to (1), wherein the non-ferromagnetic metal material contains one or more materials selected from the group consisting of Cu, a Cu alloy, Al, an Al alloy, and a non-ferromagnetic SUS.
(3) The sheath-integrated magnetic refrigeration member according to (1) or (2), wherein the magnetic refrigeration material contains one or more alloys selected from the group consisting of an R-Fe-Si alloy (where R is a rare earth element) and an R-Fe-Si-H alloy (where R is a rare earth element) in which the main component has an NaZn₁₃ type structure.
(4) The sheath-integrated magnetic refrigeration member according to (3), wherein the composition of the alloy differs in the lengthwise direction of the sheath-integrated magnetic refrigeration member.
(5) The sheath-integrated magnetic refrigeration member according to any one of (1) to (4), wherein the void ratio of the core part is less than 20%.
(6) The sheath-integrated magnetic refrigeration member according to any one of (1) to (5), wherein the sheath-integrated magnetic refrigeration member deforms two-dimensionally or three-dimensionally.
(7) The sheath-integrated magnetic refrigeration member according to any one of (1) to (6), provided with a metal mesh or a porous metal plate bonded to the sheath part.
(8) The sheath-integrated magnetic refrigeration member according to (7), wherein the sheath part is bonded to the metal mesh or the porous metal plate according to one or more bonding methods selected from the group consisting of brazing, soldering and adhering with an adhesive.
(9) A method for producing a sheath-integrated magnetic refrigeration member, including a step of filling a powder of a magnetic refrigeration material into the cavity of a pipe containing a non-ferromagnetic metal material, and a step of linearly working the pipe filled with a powder of a magnetic refrigeration material according to one or more working methods selected from the group consisting of grooved reduction rolling, swaging and drawing.
(10) The method for producing a sheath-integrated magnetic refrigeration member according to (9), wherein the magnetic refrigeration material contains one or more alloys selected from the group consisting of an R-Fe-Si alloy (where R is a rare earth element) and an R-Fe-Si-H alloy (where R is a rare earth element) in which the main component has an NaZn₁₃ type structure.
(11) The method for producing a sheath-integrated magnetic refrigeration member according to (9) or (10), wherein the cross-sectional shape of the linearly-worked pipe filled with a powder of a magnetic refrigeration material is one or more shapes selected from the group consisting of a circular shape, a semicircular shape and a square shape.
(12) The method for producing a sheath-integrated magnetic refrigeration member according to any one of (9) to (11), further including a step of thin band-like working the linearly-worked pipe filled with a powder of a magnetic refrigeration material according to reduction rolling.
(13) A magnetic refrigeration system provided with a means of operating in an AMR (active magnetic refrigeration) cycle using the sheath-integrated magnetic refrigeration member of any one of (1) to (8) as the AMR bed.

### Advantageous Effects of Invention

According to the present invention, there can be provided a sheath-integrated magnetic refrigeration member capable of preventing degradation of a magnetic refrigeration material with time in a magnetic refrigeration system without lowering the magnetocaloric effect and the thermal conductivity of the magnetic refrigeration material and its production method, and a magnetic refrigeration system using the sheath-integrated magnetic refrigeration member.

### Brief Description of the Drawings

Fig. 1 (a) to (c) each are a schematic view of a cross section vertical to the lengthwise direction of a sheath-integrated magnetic refrigeration member of one embodiment of the present invention.
Fig. 2 (a) and (b) each are a schematic view of a sheath-integrated magnetic refrigeration member of one embodiment of the present invention.
Fig. 3 (a) is a schematic view of a metal mesh bonded to a sheath part in a sheath-integrated magnetic refrigeration member of one embodiment of the present invention; Fig. 3 (b) is a schematic view of a porous metal plate bonded to a sheath part in a sheath-integrated magnetic refrigeration member of one embodiment of the present invention
Fig. 4 is a schematic view showing one example of an arrangement of sheath-integrated magnetic refrigeration members in an AMR bed where sheath-integrated magnetic refrigeration members are used.
Fig. 5 is a schematic view of a cross section vertical to the lengthwise direction and a cross section parallel to the lengthwise direction of a sheath-integrated magnetic refrigeration member of one embodiment of the present invention.
Fig. 6 is a schematic view showing one example of a magnetic refrigeration system using a sheath-integrated magnetic refrigeration member of one embodiment of the present invention.
Fig. 7 is a view showing one example of a magnetic Brayton cycle of a sheath-integrated magnetic refrigeration member used in a magnetic refrigeration system.

### Description of Embodiments

Hereinunder the present invention is described in detail.

### [Sheath-integrated Magnetic Refrigeration Member]

The present invention relates to a sheath-integrated magnetic refrigeration member that shows high performance and high corrosion resistance.

The present invention is a linear or thin band-like sheath-integrated magnetic refrigeration member that includes a sheath part containing a non-ferromagnetic metal material and a core part containing a magnetic refrigeration material. The sheath-integrated magnetic refrigeration member can prevent degradation of a magnetic refrigeration material with time in a magnetic refrigeration system without lowering the magnetocaloric effect and the thermal conductivity of the magnetic refrigeration material.

From the viewpoint of improving the magnetocaloric effect of the sheath-integrated magnetic refrigeration member, the content of the magnetic refrigeration material in the core part is preferably 85% by mass or more, more preferably 90% or more, even more preferably 95% by mass or more, further more preferably 98% by mass or more.

From the viewpoint of stably attaining a great magnetocaloric effect in a room temperature range and from the viewpoint of not containing a toxic element, the magnetic refrigeration material preferably contains one or more alloys selected from the group consisting of an R-Fe-Si alloy (where R is a rare earth element) and an R-Fe-Si-H alloy (where R is a rare earth element) in which the main component has an NaZn₁₃ type structure. Here, the R-Fe-Si alloy can be produced by melting, casting and homogenizing treatment according to an ordinary method. The R-Fe-Si-H alloy can be produced by melting, casting and homogenizing treatment followed by hydrogenation treatment according to an ordinary method. The content of the alloy in the magnetic refrigeration material is preferably 90% by mass or more, more preferably 95% by mass or more, even more preferably 98% by mass or more.

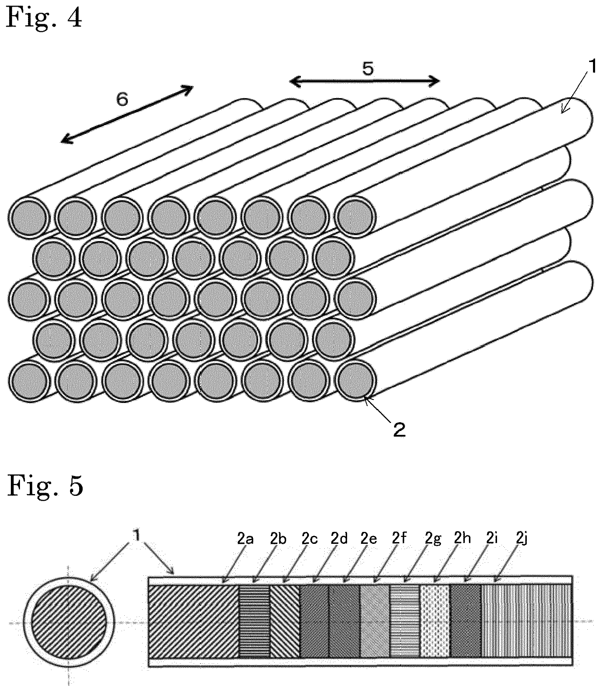

The R-Fe-Si alloy in which the main component has an NaZn₁₃ type structure is, for example, an alloy in which the main component is an R¹(Fe,Si)₁₃ compound (R¹: 7.14 atom%) having an NaZn₁₃ type structure. Regarding the alloy composition of this alloy, preferably, R¹ is 6 to 10 atom% (R¹ is one or more selected from a rare earth element and Zr, and La is indispensable therein),and the Si amount is 9 to 12 atom% among the elements except R¹ in the compound. Also preferably, a part of Fe in the R¹(Fe,Si)₁₃ compound is substituted with M (one or more elements selected from the group consisting of Co, Mn, Ni, Al, Zr, Nb, W, Ta, Cr, Cu, Ag, Ga, Ti and Sn) to produce a series of alloys each having a different Curie temperature (for example, alloys in which the main component is an R¹(Fe,M,Si)₁₃ compound (R¹: 7.14 atom%) having an NaZn₁₃ type structure). By combining the thus-produced alloys each having a different Curie temperature in layers to use them in a magnetic refrigeration system (for example, see Fig. 5), the cooling performance of the refrigeration system can be further increased.

The above-mentioned alloy can be obtained by melting a raw material metal or alloy in vacuum or in an inert gas, preferably in an Ar atmosphere, and then casting the resultant melt into a planar mold or a book mold or casting it according to a liquid quenching technique or a strip casting method. Also preferably, a powdery alloy can be produced according to an atomizing method. Depending on the alloy composition, the cast alloy may be composed of a primary crystal α-Fe(, Si) and an R-Si phase (where R is a rare earth element). In this case, for forming an R(Fe,Si)₁₃ compound (where R is a rare earth element), the alloy may be homogenized at around the decomposition temperature of the compound (at around 900 to 1300°C, greatly depending on the alloy composition) or lower than the temperature for a predetermined period of time (10 hours to 30 days, though depending on the morphology of the alloy).

The alloy after homogenization in which the main component is an R(Fe,Si)₁₃ compound is brittle, and can be mechanically ground with ease into a powder having a size of a few hundred µm. For absorption of H, the alloy may be heat-treated in a hydrogen atmosphere after roughly ground as above or without being ground. The treatment condition may be changed depending on the amount of hydrogen to be absorbed, but preferably, in general, the alloy may be heat-treated under a hydrogen partial pressure of around 0.1 to 0.5 MPa at 200 to 500°C for about 1 to 20 hours. After hydrogenation treatment, the alloy becomes more brittle, and at the time when it is taken out, the alloy is often a powder in a size of a few hundred µm.

The thus-produced powder may be filled into a pipe containing a non-ferromagnetic metal material, for example, into the cavity of a pipe containing one or more materials selected from the group consisting of Cu, a Cu alloy, Al, an Al alloy and a non-ferromagnetic SUS. At that time, preferably, tapping is combined to fill the powder at a possibly highest filling rate. Also preferably, a metal soap or the like is mixed before filling so as to previously increase the filling performance. For intentionally increasing the thermal conductivity thereof, the hydrogenated powder may be mixed with a metal powder such as Cu or Al. The particle size and the weight fraction thereof may be appropriately determined depending on the performance of the system, but preferably a powder having an average particle size of around 1 to 100 µm is mixed in an amount of 1 to 15% by weight. The content of the one or more materials selected from the group consisting of Cu, a Cu alloy, Al, an Al alloy and a non-ferromagnetic SUS in the non-ferromagnetic metal material is preferably 90% by mass or more, more preferably 95% by mass or more, even more preferably 98% by mass or more.

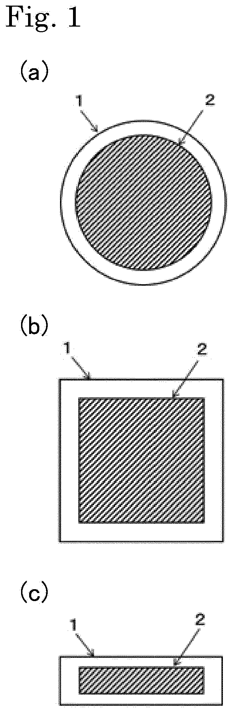

As needed, both ends of the pipe filled with a magnetic refrigeration material powder may be crushed or a metal lid may be brazed to each end of the pipe, for example. After a magnetic refrigeration material powder is filled into a pipe, the pipe filled with a magnetic refrigeration material powder may be linearly worked according to one or more working methods selected from the group consisting of grooved reduction rolling, swaging and drawing. For example, preferably, until the outer diameter of the pipe reaches 10 to 80% or so of the original outer diameter thereof, the pipe filled with a magnetic refrigeration material powder is drawn. As a result of the treatment, the filling rate of the magnetic refrigeration material powder can be increased without heating. After worked, the cross section of the pipe filled with a magnetic refrigeration material powder may be any one or more shapes selected from the group consisting of a circular shape (see Fig. 1(a)), a semicircular shape and a square shape (see Fig. 1(b)). Finally, in the case where the pipe filled with a magnetic refrigeration material powder is worked into a thin band-like shape (ribbon-like shape) (see Fig. 1(c)), the pipe may be further rolled for reduction after drawn into a predetermined level. Also the pipe may be rolled for reduction with a grooved roll to have a rectangular cross section. One example of a cross section vertical in the lengthwise direction of the thus-produced sheath-integrated magnetic refrigeration member is schematically shown in Fig. 1. A sheath part 1 is formed of a material of the pipe, and preferably a core part 2 contains one or more alloys selected from the group consisting of an R-Fe-Si alloy and an R-Fe-Si-H alloy.

As a result of the working treatment as above, the pipe filled with a magnetic refrigeration material powder is worked into a linear or thin band-like pipe, and accordingly, the filling rate of the magnetic refrigeration material powder therein increases, and owing to increase in the occupancy rate of the magnetic refrigeration material per the unit volume in the core part, the resultant pipe can exhibit a highly-efficient magnetic refrigeration effect. The filling rate of the magnetic refrigeration material powder in the core part in this case is preferably higher, and is ideally most preferably 100%, but is substantially preferably 80% or more, more preferably 90% or more. The occupancy rate can be calculated from the area-based void ratio (areal void ratio) in the core part in observation of an arbitrary cross section of the sheath-integrated magnetic refrigeration member, and the relationship between the occupancy rate V and the areal void ratio S is V = 100 - S (%). Here, the relationship between the occupancy rate and the filling rate is (occupancy rate) × 1 = filling rate. Accordingly, ideally, the void ratio is most preferably 0%, but is substantially preferably less than 20%, more preferably less than 10%.

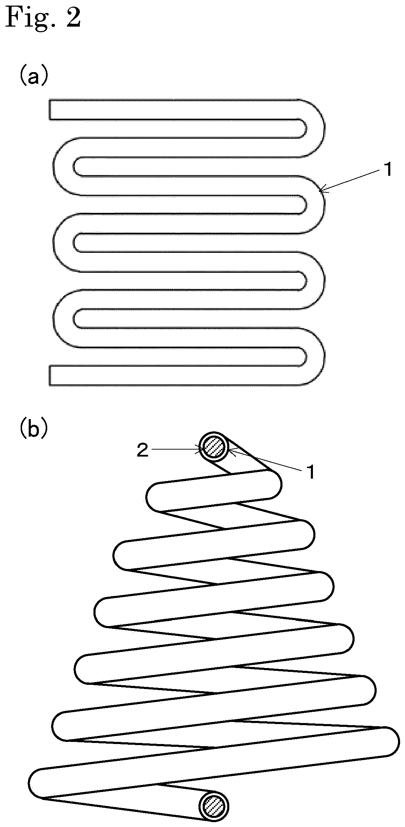

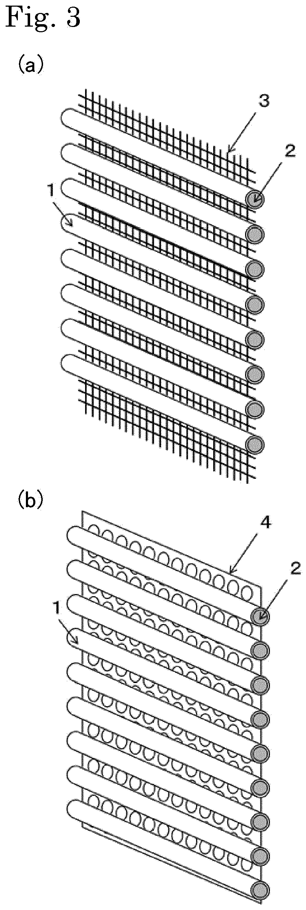

The resultant linear or thin band-like sheath-integrated magnetic refrigeration member is cut into a size suitable for a magnetic refrigeration system, and as needed, the sheath part of the cut edge is pressure-bonded or the cut edge is sealed with a resin, for example. Further, the member is worked to have a suitable form and then arranged in a magnetic refrigeration system. For efficient heat exchange with a heat medium, the sheath-integrated magnetic refrigeration member may be two-dimensionally or three-dimensionally deformed in accordance with the medium stream so as to have any desired shape such as a waved shape or a swirly shape, as schematically illustrated in Fig. 2. Deformation and cut edge sealing may be carried out in reverse order. Also as needed, the sheath part 1 may be bonded to a metal mesh 3 or a porous metal plate 4 through which a heat medium can pass according to one or more bonding methods selected from the group consisting of, for example, brazing, soldering and adhesion with an adhesive, as schematically illustrated in Fig. 3. Having the configuration, heat exchange can be attained efficiently and the sheath-integrated magnetic refrigeration member can be handled with ease.

In the case where the sheath-integrated magnetic refrigeration member is used as an AMR bed, preferably, the sheath-integrated magnetic refrigeration member is so arranged that a heat medium can run in a vertical direction 5 relative to the lengthwise direction of the member, as shown in Fig. 4. In the case where a heat medium runs in a parallel direction 6 relative to the lengthwise direction of the sheath-integrated magnetic refrigeration member owing to planning of a refrigeration system (see Fig. 4), the composition of the magnetic refrigeration material may differ in the lengthwise direction of the sheath-integrated magnetic refrigeration member. For example, as schematically illustrated in Fig. 5, plural magnetic refrigeration materials 2a to 2j may be filled in one sheath in descending order or ascending order of the Curie temperature (Tc) thereof to provide the sheath-integrated magnetic refrigeration member. With that, the sheath-integrated magnetic refrigeration member can create a large temperature difference. In Fig. 5, 2a to 2j each show a magnetic refrigeration material having a mutually different composition. Each having such a mutually different composition, the magnetic refrigeration materials 2a to 2j also mutually differ in the Curie temperature (Tc). Preferably, the Curie temperature (Tc) of the magnetic refrigeration materials 2a to 2j differs in descending or ascending order of the magnetic refrigeration materials 2a to 2j.

Thus obtained, the sheath-integrated magnetic refrigeration member has a high filling rate of 80% or more in the core part, and the magnetic refrigeration material therein is not corroded as surrounded by the sheath part, and in addition, since the thermal conductivity of the sheath part is high, the sheath-integrated magnetic refrigeration member can realize a high thermal exchange efficiency in a magnetic refrigeration system.

### [Magnetic Refrigeration System]

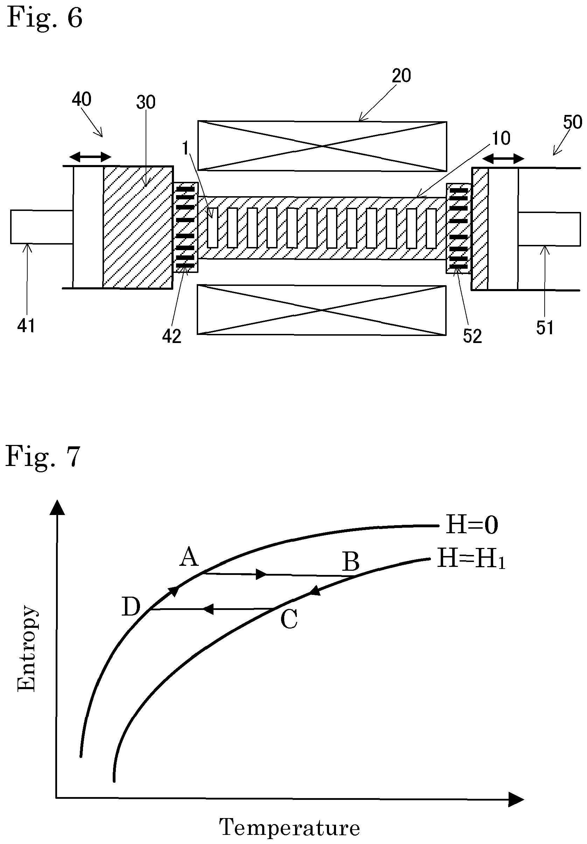

The magnetic refrigeration system of the present invention is provided with a means of operating in an AMR (active magnetic refrigeration) cycle using the sheath-integrated magnetic refrigeration member of the present invention as the AMR bed. One example of the magnetic refrigeration system of the present invention is shown in Fig. 6.

One example of the magnetic refrigeration system of the present invention is provided with an AMR bed 10, a solenoid 20 to generate a magnetic field in the AMR bed, a cooling part 40 to cool a fluid to be cooled using a heat medium 30 cooled by the AMR bed 10, and a heat exhausting part 50 to exhaust the heat of the heat medium 30 heated by the AMR bed 10, as shown in Fig. 6. The AMR bed 10 uses the sheath-integrated magnetic refrigeration member of the present invention. The cooling part 40 is provided with a displacer 41 for injecting and ejecting the heat medium 30 in or from the cooling part 40 and a heat exchanger 42 for carrying out heat exchange between the heat medium 30 cooled by the AMR bed 10 and the fluid to be cooled. The heat exhausting part 50 is provided with a displacer 51 for injecting and ejecting the heat medium 30 in or from the heat exhausting part 50 and a heat exchanger 52 for exhausting heat from the heat medium 30 heated by the AMR bed 10. The heat medium 30 passes through the AMR bed 10 and moves between the cooling part 40 and the heat exhausting part 50. For example, in the case where water is cooled using one example of the magnetic refrigeration system of the present invention, the fluid to be cooled is water, and in the case where alcohol is cooled, the fluid to be cooled is alcohol.

Next, an AMR cycle utilized by one example of the magnetic refrigeration system of the present invention is described with reference to Fig. 6 and Fig. 7. Fig. 7 is a view showing one example of a magnetic Brayton cycle used by one example of the magnetic refrigeration system of the present invention mentioned above, using a sheath-integrated magnetic refrigeration member. A curve with H = 0 is a temperature-entropy curve of the sheath-integrated magnetic refrigeration member in demagnetization. A curve with H = H₁ is a temperature-entropy curve of the sheath-integrated magnetic refrigeration member in a magnetic field.

In a state where the heat medium 30 is in the cooling part 40, the AMR bed 10 is adiabatically magnetized to increase the temperature of the sheath-integrated magnetic refrigeration member in the AMR bed 10 (in Fig. 7, A → B). Next, the displacers 41 and 51 in the cooling part 40 and the heat exhausting part 50 are respectively moved to move the heat medium 30 from the cooling part 40 to the heat exhausting part 50. As a result, the heat medium 30 receives heat from the sheath-integrated magnetic refrigeration member in the AMR bed 10 and the temperature of the heat medium 30 therefore increases. On the other hand, the heat of the sheath-integrated magnetic refrigeration member in the AMR bed 10 is absorbed by the heat medium 30, and therefore the temperature of the sheath-integrated magnetic refrigeration member in the AMR bed 10 lowers (in Fig. 7, B → C). The heat medium 30 that has received the heat from the sheath-integrated magnetic refrigeration member in the AMR bed 10 exhausts the heat in the heat exchanger 52 in the heat exhausting part 50.

In a state where the heat medium 30 is in the heat exhausting part 50, the AMR bed 10 is adiabatically demagnetized to lower the temperature of the sheath-integrated magnetic refrigeration member in the AMR bed 10 (in Fig. 7, C → D). Next, the displacers 41 and 51 in the cooling part 40 and the heat exhausting part 50 are respectively moved to move the heat medium 30 from the heat exhausting part 50 to the cooling part 40. As a result, the heat of the heat medium 30 is absorbed by the sheath-integrated magnetic refrigeration member in the AMR bed 10 and the temperature of the heat medium 30 therefore lowers. On the other hand, the sheath-integrated magnetic refrigeration member in the AMR bed 10 receives heat from the heat medium 30, and therefore the temperature of the sheath-integrated magnetic refrigeration member in the AMR bed 10 increases (in Fig. 7, D → A). The heat medium 30 that has been cooled by the sheath-integrated magnetic refrigeration member in the AMR bed 10 then cools the fluid to be cooled via the heat exchanger 42 in the cooling part 40. In the manner as above, one example of the magnetic refrigeration system of the present invention can utilize an AMR cycle. The sheath-integrated magnetic refrigeration member for use in the AMR bed draws a magnetic Brayton cycle of A → B → C → D as in Fig. 7.

The magnetic refrigeration system of the present invention is not limited to the above-mentioned one example of the magnetic refrigeration system of the present invention so far as the system is provided with a means of operating in an AMR cycle. Also the AMR cycle is not limited to the above-mentioned AMR cycle so far as magnetic refrigeration can be carried out by utilizing an AMR bed using the sheath-integrated magnetic refrigeration member of the present invention.

### Examples

Hereinunder more specific embodiments of the present invention are described with reference to Examples, to which, however, the present invention is not limited.

According to a strip casting method of radiofrequency-melting La having a purity of 99% by weight or more, an Fe metal, and Si having a purity of 99.99% by weight or more in an Ar atmosphere, followed by casting the melt into a copper single roll, a thin band-like alloy containing 7.2 atom% of La and 10.5 atom% of Si with a balance of Fe was produced. The alloy was exposed to H₂ of 0.2 MPa at 200°C for hydrogen absorption, then cooled and sieved to give a coarse powder of 250 mesh or less.

Subsequently, stearic acid was added to the coarse powder in a ratio of 0.1% by weight, and stirred with a V blender for 30 minutes, and the resultant powder was filled with tapping into a copper pipe having a size of outer diameter 6 mm × inner diameter 5 mm and a length of 300 mm. As calculated from the weight change Δm between the weight of the unfilled copper pipe, and the total weight of the filled copper pipe and the powder, the density ρ of the coarse powder, and the pipe inner volume Vp, the filling rate of the coarse powder was about 50%.

The copper pipe filled with the coarse powder was rolled for reduction using a grooved roll until the outer diameter thereof could reach 3 mm to give a sheath-integrated magnetic refrigeration member. The cross section thereof vertical to the rolling direction was observed, and the area-based void ratio of La(Fe_{0.89}Si_{0.11})₁₃Hₓ was 7%, and the area-based filling rate was 93%. In the thus-produced sheath-integrated magnetic refrigeration member, La(Fe_{0.89}Si_{0.11})₁₃Hₓ is protected from a heat medium by the copper sheath part, and therefore La(Fe_{0.89}Si_{0.11})₁₃Hₓ can be prevented from being degraded by a heat medium. Since the copper sheath part has a high thermal conductivity, heat exchange between La(Fe_{0.89}Si_{0.11})₁₃Hₓ and a heat medium can be attained effectively. Further, since the filling rate of La(Fe_{0.89}Si_{0.11})₁₃Hₓ in the core part is high, the magnetocaloric effect of La(Fe_{0.89}Si_{0.11})₁₃Hₓ can be high.

### Reference Signs List

- 1: Sheath Part
- 2: Core Part
- 2a to 2j: Magnetic Refrigeration Materials
- 3: Metal Mesh
- 4: Porous Metal Plate
- 5: Heat Medium Running Direction 1
- 6: Heat Medium Running Direction 2
- 10: AMR Bed
- 20: Solenoid
- 30: Heat Medium
- 40: Cooling Part
- 41, 51: Displacers
- 42, 52: Heat Exchangers
- 50: Heat Exhausting Part

## Claims

1. A linear or thin band-like sheath-integrated magnetic refrigeration member comprising:
a sheath part containing a non-ferromagnetic metal material and a core part containing a magnetic refrigeration material.

2. The sheath-integrated magnetic refrigeration member according to claim 1, wherein the non-ferromagnetic metal material contains one or more materials selected from the group consisting of Cu, a Cu alloy, Al, an Al alloy, and a non-ferromagnetic SUS.

3. The sheath-integrated magnetic refrigeration member according to claim 1 or 2, wherein the magnetic refrigeration material contains one or more alloys selected from the group consisting of an R-Fe-Si alloy (where R is a rare earth element) and an R-Fe-Si-H alloy (where R is a rare earth element) in which the main component has an NaZn₁₃ type structure.

4. The sheath-integrated magnetic refrigeration member according to claim 3, wherein the composition of the alloy differs in the lengthwise direction of the sheath-integrated magnetic refrigeration member.

5. The sheath-integrated magnetic refrigeration member according to any one of claims 1 to 4, wherein the void ratio of the core part is less than 20%.

6. The sheath-integrated magnetic refrigeration member according to any one of claims 1 to 5, wherein the sheath-integrated magnetic refrigeration member deforms two-dimensionally or three-dimensionally.

7. The sheath-integrated magnetic refrigeration member according to any one of claims 1 to 6, provided with a metal mesh or a porous metal plate bonded to the sheath part.

8. The sheath-integrated magnetic refrigeration member according to claim 7, wherein the sheath part is bonded to the metal mesh or the porous metal plate according to one or more bonding methods selected from the group consisting of brazing, soldering and adhering with an adhesive.

9. A method for producing a sheath-integrated magnetic refrigeration member, comprising:
a step of filling a powder of a magnetic refrigeration material into the cavity of a pipe containing a non-ferromagnetic metal material, and
a step of linearly working the pipe filled with a powder of a magnetic refrigeration material according to one or more working methods selected from the group consisting of grooved reduction rolling, swaging and drawing.

10. The method for producing a sheath-integrated magnetic refrigeration member according to claim 9, wherein the magnetic refrigeration material contains one or more alloys selected from the group consisting of an R-Fe-Si alloy (where R is a rare earth element) and an R-Fe-Si-H alloy (where R is a rare earth element) in which the main component has an NaZn₁₃ type structure.

11. The method for producing a sheath-integrated magnetic refrigeration member according to claim 9 or 10, wherein the cross-sectional shape of the linearly-worked pipe filled with a powder of a magnetic refrigeration material is one or more shapes selected from the group consisting of a circular shape, a semicircular shape and a square shape.

12. The method for producing a sheath-integrated magnetic refrigeration member according to any one of claims 9 to 11, further comprising a step of thin band-like working the linearly-worked pipe filled with a powder of a magnetic refrigeration material according to reduction rolling.

13. A magnetic refrigeration system provided with a means of operating in an AMR (active magnetic refrigeration) cycle using the sheath-integrated magnetic refrigeration member of any one of claims 1 to 8 as the AMR bed.
